# EUROPEAN PATENT APPLICATION

(11) **EP 3 336 704 A1**
(43) Date of publication of application: **20.06.2018**
(21) Application number: 16306732.5
(22) Date of filing: 19.12.2016
(51) Int. Cl.: G06F 11/30, G06F 11/07

(54) **A METHOD FOR SELECTING A ROOT NODE IN A CLOUD ENVIRONMENT**

(71) Applicant: Alcatel Lucent, 91620 Nozay (FR)
(72) Inventor: KOSTADINOV, Dimitre Davidov, 91620 NOZAY (FR); AGHASARYAN, Armen, 91620 NOZAY (FR); BOUZID, Makram, 91620 NOZAY (FR)
(74) Representative: Loyer & Abello

(57) **Abstract**

The invention relates to a method for selecting a root node in a cloud environment (10), comprising:
- detecting (1) a plurality of alarms raised in the cloud environment,
- providing (3) a set of candidate nodes (11, 12, 13, 14) of the cloud environment, each candidate node being correlated to one or more raised alarm (a, b, c, d, e, f),
- identifying (5) a neighbor node of a candidate node of the set of candidate nodes,
- generating (6) a new set of candidate nodes comprising the neighbor node and the set of candidate nodes,
- detecting ®if the root node belongs to the new set of candidate nodes, and, if the root node belongs to the new set of candidate nodes, determining (7) the root node among the new set of candidate nodes.

## Description

### Field of the invention

The invention relates to retrieving a root fault in a chain of faults. The invention applies particularly well to complex networks like cloud infrastructures, especially multi-tenant cloud infrastructures.

### Background of the invention

Data processing system like cloud infrastructures and more specifically multi-tenant cloud infrastructure are complex and dynamic.

Surveillance of such systems is challenged by the high volume of measurements, data and alarms to be processed. Often, a single fault or problem may produce multiple alarms in cascade, and a given alarm can be caused by different faults: this creates ambiguities in the interpretation of alarms by the human operator, and also a possibly-overwhelming number of alarms presented to him.

As a consequence, it may be crucial to react quickly to alarms. A delayed understanding of the faults negatively impacts the customer satisfaction. Accordingly, an identification of the root fault when a fault or problem occurs is an essential feature.

### Summary of the invention

Aspects of the disclosure are based on the idea of finding the root fault when an event occurs.

In an embodiment, the invention provides a method for selecting a root node in a cloud environment, the cloud environment comprising nodes for running application programs, wherein each node comprises at least one resource, each resource being associated with a metric, the metric of each resource being associated to a resource metric threshold, wherein some nodes of the cloud environment are connected to each other by dependencies,
the method comprising:
- detecting a plurality of alarms raised in the cloud environment, wherein each raised alarm is produced by a fault occurring in a resource of a node of the cloud environment, wherein a fault occurs when the metric of the resource gets over the associated resource metric threshold, wherein each fault belongs to a chain of faults starting from a root fault and propagating in the cloud environment, wherein the root fault is occurring in a root node,
- providing a set of candidate nodes of the cloud environment, each candidate node being correlated to one or more raised alarms, wherein a candidate node is correlated to a raised alarm produced by a fault occurring in a resource of the candidate node,
- identifying a neighbor node of a candidate node of the set of candidate nodes, wherein a node is a neighbor of another node if the node and the other node are connected by a dependency,
- generating a new set of candidate nodes comprising the neighbor node and the set of candidate nodes,
- detecting if the root node belongs to the new set of candidate nodes, and,
- if the root node belongs to the new set of candidate nodes, determining the root node among the new set of candidate nodes.

Thanks to these features, the root fault and the root node may be discovered efficiently even in a complex cloud infrastructure.

In embodiment, such a method can comprise one or more of the features below.

In an embodiment, the method further comprises: if the root node does not belong to the new set of candidate nodes, iterating to the step of identifying a neighbor node

In an embodiment, the method further comprises, before the step of identifying:
- scoring each candidate node of the set of candidate nodes, wherein scoring attributes a root probability that a candidate node is the one in which the root fault occurs,
- ranking each candidate node of the set of nodes by priority order,
- selecting a defined number of the highest priority order candidate nodes to select a subset of the candidate nodes,
- for each selected highest priority order candidate node, identifying a neighbor node of the selected highest priority order candidate node,
- wherein the new set of candidate nodes generated comprises the identified nodes and the highest priority order candidate nodes,
- iterating to the step of scoring.

In an embodiment, the at least one resource of the node is selected in the group consisting of:
- a network
- a random access memory RAM
- a hard drive
- a Central Processing Unit CPU,
wherein the metric of the network is the rate of used bandwidth in input/output of the node, the metric of the RAM is a rate of used memory, the metric of the hard drive is a rate of celerity of writing and reading on the hard drive, and the metric of CPU is a rate of used cycles of calculation.

In an embodiment, the node is either a hardware computer machine or a virtual machine VM hosted on a hardware computer machine, wherein a dependency connecting some nodes of the cloud environment is a vertical and/or horizontal dependency, wherein an horizontal dependency associates two nodes running a same application program, and a vertical dependency associates a VM to the hardware computer machine hosting the VM.

In an embodiment, the priority order relates to the root probability, the higher the root probability, the higher being the priority order.

In an embodiment, a node may be instantiated in one or more instantiations of the node,
- the method further comprising:
- determining a set of instantiations of nodes, each instantiation of a node being associated to one of the raised alarms,
- for each determined instantiation of node of the set, correlating the associated alarm to the instantiated node, in order to get the set of nodes of the cloud, each node being correlated to one or more raised alarms, wherein the instantiations of nodes are the resources of the nodes.

In an embodiment, the method further comprises:
- comparing the root probability to a threshold,
- if the root probability is above the threshold, identifying the candidate node as being the root node.

In an embodiment, the method further comprises: sending a request comprising an identifier of the root node.

In an embodiment, the method further comprises: displaying the identifier of the root node. For example, the display of the identifier is performed by displaying a string character, wherein the string character represents the identifier.

In an embodiment, scoring of a candidate node is a function of at least one of the elements selected in the list consisting of:
- a number of alarms raised by a resource of the candidate node,
- a mean number of neighbor nodes of the candidate node,
- a mean number of alarms raised by the neighbor nodes of the candidate node,
- a type of application program the candidate node runs,
- a type of hardware computer machine hosting the candidate node,
- a number of times the candidate node belongs to a set of candidate nodes.

The invention also provides a device for selecting a root fault in a cloud environment, the cloud environment comprising nodes for running application programs, wherein each node comprises at least one resource, each resource being associated with a metric, the metric of each resource being associated to a resource metric threshold, wherein some nodes of the cloud environment are connected to each other by dependencies,
the device comprising:
- an anomaly detection and alarm generation module comprising an input configured to detect a plurality of alarms raised in the cloud environment, wherein each raised alarm is produced by a fault occurring in a resource of a node of the cloud environment, wherein a fault occurs when the metric of the resource gets over the associated resource metric threshold, wherein each fault belongs to a chain of faults starting from a root fault and propagating in the cloud environment, wherein the root fault is occurring in a root node,
- a current state of diagnostic module comprising an output configured to provide a set of candidate nodes of the cloud environment, each candidate node being correlated to one or more raised alarm, wherein a candidate node is correlated to a raised alarm produced by a fault occurring in a resource of the candidate node,
- a multi node alarm correlation module configured to receive the set of candidate nodes and being further configured to identify a neighbor node of a candidate node of the set of candidate nodes, wherein a node is a neighbor of another node if the node and the other node are connected by a dependency, the multi-node alarm correlation module being further configured to generate a new set of candidate nodes comprising the neighbor node and the set of candidate nodes,
- a root fault scoring module configured to detect if the root node belongs to the new set of candidate nodes, and being further configured to, if the root node belongs to the new set of candidate nodes, determining the root node among the new set of candidate nodes.

Further features and advantages of the invention will appear from the following description of embodiments of the invention, given as nonlimiting examples, with reference to the accompanying drawings listed hereunder.

### Brief description of the drawings

Fig. 1 shows schematics of a cloud environment comprising a plurality of interdependent nodes.
Fig. 2 represents a device for retrieving a root fault in a chain of faults occurring in the cloud environment of Figure 1 by iterating from a set of candidate nodes to another.
Fig. 3 represents an example of three successive sets of candidate nodes belonging to the cloud environment of Figure 1 and retrieved by the device of Figure 2.

### Detailed description of the embodiments

According to embodiments of the invention, large and complex data processing systems like multi-tenant cloud infrastructures are addressed.

A multi-tenant cloud infrastructure allows mutualizing the resources, e.g. host machines, which are hardware machines, among several clients or "tenants". Each tenant can use the cloud infrastructure in an independent way of the others, by creating, migrating, stopping, destroying resources such as virtual machines (VM) and running application on the resources.

Sometimes, faults occur in the multi-tenant cloud infrastructure and the complexity and the dynamicity of the topology of the cloud infrastructure makes it difficult to retrieve the root fault in a chain of propagating faults.

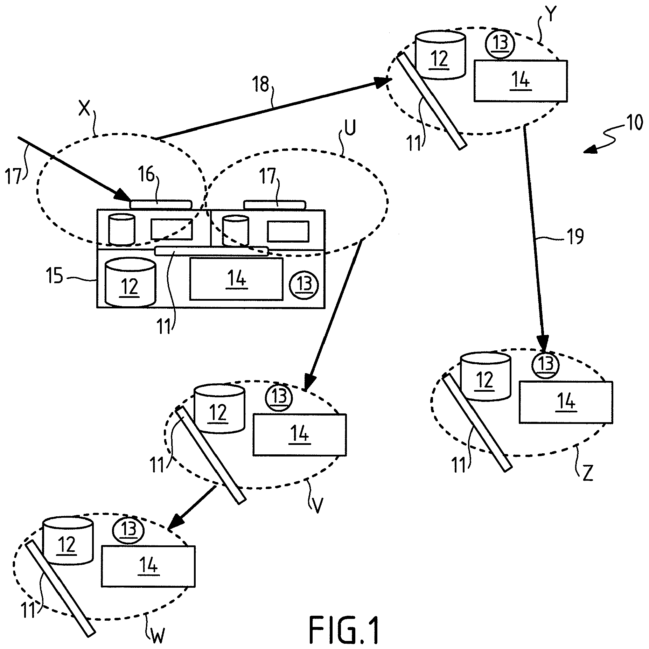

For example, according to Figure 1, a cloud environment 10 is represented. The cloud environment 10 comprises a plurality of nodes for running application programs. The nodes are interdependent and communicate with some of the other nodes of the cloud environment.

For the sake of illustration, six nodes are represented, but the cloud environment may comprise any number of nodes.

The nodes represented on the Figure 1 are referenced by the following letters: U, V, W, X, Y and Z.

The nodes of the cloud environment 10 comprise resources, for example a network bandwidth 11, a random access memory (RAM) 12, a hard drive 13 and a Computer Processing Unit (CPU) 14. For the sake of illustration, the resources belonging to a same node are circled in dot lines.

The nodes Y, Z, W and V represented on Figure 1 are hardware computer machine whereas the nodes X and U are virtual machines sharing a same host computer machine 15. The nodes X and U are therefore sharing the resources of the host computer machine 15.

For example, the node X has a network bandwidth 16 whereas the node U has a network bandwidth 17. The network bandwidths 16 and 17 cannot exceed the network bandwidth 11 of the host machine.

Similarly, the nodes X and Y share the random access memory 12 of the host computer machine 15, etc.

The nodes X and U are in a vertical dependency as they share the same host computer machine 15.

The resources of the nodes will now be described more in detail.
- The network interface 11 is configured to receive and emit requests from and to other nodes. An associated metric of the network interface is an input/output bandwidth of the network interface.
- The RAM 12 of the node is configured to store information to be read. An associated metric of the RAM is the rate of used memory.
- The hard drive 13 of the node is configured to write and read information. An associated metric of the hard drive is a rate of celerity of writing and reading on the hard drive.
- The CPU 14 is configured to perform calculations. An associated metric of the CPU is a rate of used cycles of calculation.

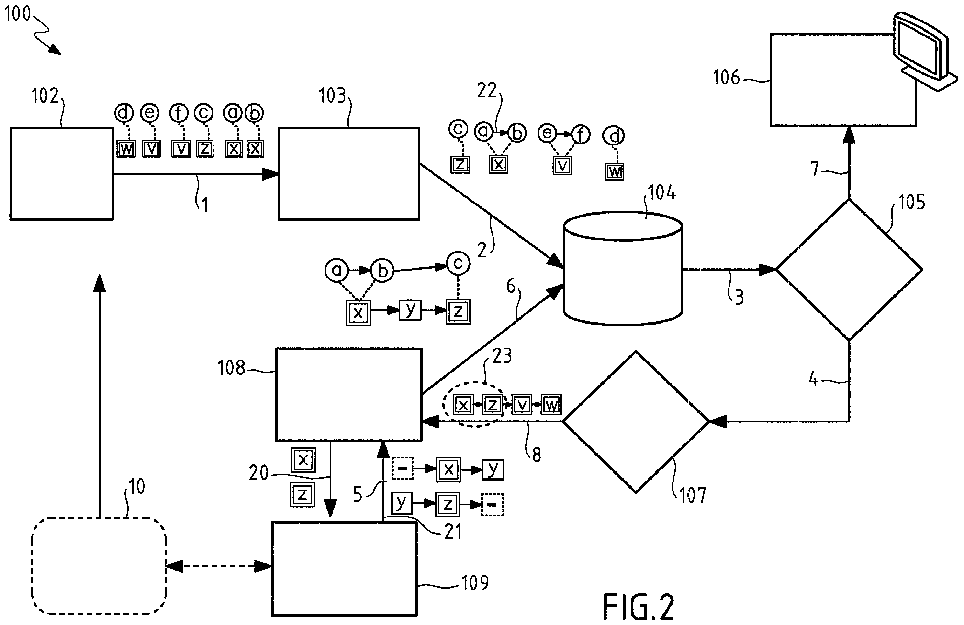

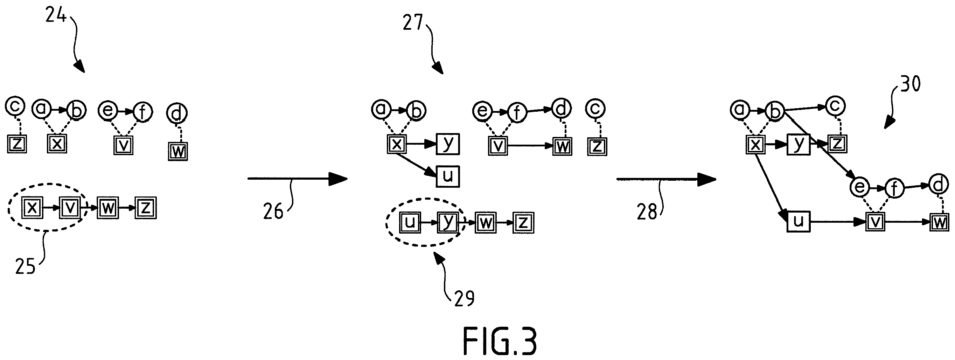

When any of the resources of a node exceeds a predefined threshold, the node may dysfunction and an alarm is raised by an anomaly detection and alarm generation module 102 as it will be further explained with reference to Figures 2 and 3.

For example, actual cases for fault alarms can be a CPU 14 overloaded, CPU 14 starving, e.g. a VM experiences problems due to lack of CPU 14 resources, an excessive response delay, e.g. a virtual machine VM experiences problems due to excessive response time from an horizontally dependent VM, with which it has many interactions since both are running the same application program, etc.

For example, let us consider that the node X is running an application for booking a car, the node Y is running an application for booking a hotel room and the node Z comprises a database of available hotel rooms.

The node X receives requests 17 from clients for retrieving cars to be rent, and further sends requests 18 to the node Y in order to automatically propose to the clients a selection of available hotel rooms associated with rent cars. The node Y therefore sends requests 19 to the node Z in order to retrieve available hotel rooms in the RAM 12 of node Z.

In general, any threshold may be arbitrary defined for each resource of each node. The defined thresholds are most of the time different from each other.

For the sake of illustration, assuming that the defined thresholds are similar for the nodes Y and Z and that the network interface 11 of the node Y overcomes a defined threshold because the number of requests 18 received at a time slot is too high.

Then, it is likely that the network interface 11 of the node Z will also overcomes a defined threshold for the same reasons, as by assumption, each request 18 received by the node Y is followed by a request 19 from node Y to node Z.

Moreover, it is likely that a too high number of requests 18 also lead to an overcoming of the defined threshold for the CPU 14 of the node Y.

For example, the network interface 16 of the node X exceeds the defined threshold. Therefore, the network interface 17 of the node U is impacted as the network interfaces 16 and 17 are sharing the network interface 11 of the host computer machine, which is not unlimited.

Therefore, a too high number of requests 17 can lead to a root fault on the network interface 16 node X. The root fault X may then propagate to a second fault on the CPU of node X, and to a third fault on the network interface 17 of node U. Moreover, the root fault may propagate to a fourth fault on the network interface 14 of node Y and to a five fault on the CPU 14 of node Y. The fourth fault may similarly propagate to a sixth fault on the network interface 11 of node Z, etc.

Figure 2 represents a system 100 for retrieving a root fault in a chain of faults. The chain of faults occurs in the network environment of Figure 1.

The system 100 comprises an anomaly detection and alarm generation module 102, a mono-node alarm correlation module 103, a current state of diagnostic module 104, a root fault scoring module 105, an active node prioritizing module 107, a multi node alarm correlation module 108, a local topology provider module 109 and a supervised cloud environment.

For the sake of illustration, the cloud environment under supervision represented on Figure 2 is the cloud environment 10 previously described with reference to Figure 1.

The Local Topology Provider module 109 is configured to retrieve the topology of the cloud environment 10, i.e. is configured to get the immediate neighborhood of any tracked node.

In other words, the module 109 tracks the interactions of tracked nodes. The neighbor nodes of a tracked node are selected in the list consisting of:
- the nodes exchanging requests with the tracked node, i.e. horizontal dependencies, and
- the nodes sharing the resources of the tracked node or with the tracked nodes, i.e. vertical dependencies.

The Anomaly Detection and Alarm Generation module 102 is configured to perform a step 1 represented by an arrow on Figure 2, as described below.

The module 102 is configured to monitor resources of nodes of the network in order to detect faults occurring in nodes.

The module 102 detects the faults previously described in the nodes of the cloud environment 10 and raises an alarm for each. The alarms are referred to by letters "a" to "g" on Figure 3. The module 102 is configured to generate an alarm in the node when detecting that a fault occurs in a node. A fault is occurring when a metric is exceeding a predefined resource metric threshold, as previously described.

For example, in the cloud environment 10 described with reference to Figure 1, the root fault raises an alarm "a", the second fault raises an alarm "b", the alarms "a" and "b" being associated to the node X. The sixth fault raises an alarm "c" associated to node Z. As represented, an alarm "d" is raised for the node W, an alarm "e" and an alarm "f" are raised for the node V.

The generated alarms "a", "b", "c", "d", "e" and "f" and the associated nodes of each of the alarms serve as input for the Mono Node Alarm Correlation module 103, as it is further described

The module 103 is configured to perform a step 2 represented by an arrow on Figure 2, as it is described below.

The module 103 is configured to retrieve if a same node is associated to a plurality of alarms, i.e. if a given alarm produced by a component is caused by another alarm of the same component.

For example if the CPU usage of a VM increases, this will cause an increase in the response time of the application deployed on it.

The module 103 is configured to find and select root faults in a set of faults associated to a same node and to send a reduced list of alarms associated with nodes on which a fault has occurred. The reduced list of alarms associated with nodes on which a fault has occurred will now be referred to as "the set of candidate nodes".

For example, a defective Hard drive will slow down the read/writes, which will raise an alarm, and will also increase the response time of the application deployed on the host, which will on its turn raise another alarm. By building the correlation between the two alarms, it is easy to deduce that the root fault is the Hard drive as read/writes are local for the physical host.

For example, in the cloud environment 10 described with reference to Figure 1, the alarms "a" and "b" are correlated by the module 103 with the node X, as represented by arrow 22. Similarly, the alarms "e" and "f" are correlated by the module 103 with the node V.

The module 103 is configured to send a reduced set of candidate nodes to the module 104.

The reduced set of candidate nodes comprises the nodes correlated to the alarms and the associated alarms. The reduced set of candidate nodes does not comprise twice a same node.

For example, the reduced set of candidate nodes comprises the following nodes: X, associated with the respective alarms "a" and "b", Z associated to the alarm "c", V associated to the alarms "e" and "f" and W associated to the alarm "d".

The module 103 therefore enables reducing the number of alarms to be considered in the next steps of the method.

The Current state of diagnostic module 104 receives the reduced set of candidate nodes transmitted by the module 103 and stores it.

The module 104 is further configured to send the candidate nodes to a Root fault Scoring module 105 in a step 3.

The module 105 is configured to receive the set of candidate nodes and to evaluate the probability that the root node is a candidate node of the set. The root node is the node where the root fault takes place.

The score depends on the number of nodes for whose alarms a root fault has not been discovered yet.

If the score exceeds a predefined score threshold, then the module 105 transmits the candidate node which is likely to be associated with the root fault to a root-fault presentation module 106 in a step 7.

The module 105 is configured in other cases to transmit the set of candidate nodes to an active node prioritizing module 107 in an alternative step 4.

The module 107 is configured to rank the candidate nodes by a priority rank and to select the best ranked candidate nodes in a step 8.

The priority rank expresses the probability of a candidate node of the list to lead to a root fault.

The rank of a candidate node depends on:
- the number of alarms raised by the candidate node,
- the mean number of neighbors of the candidate node,
- the mean number of alarms raised by neighbors which lead to the candidate node,
- the prior probability that the candidate node fails which depends on both the type of application deployed on it and the eventual host computer machine on which the candidate node is deployed,
- the number of times the candidate node appeared in a set of candidate nodes and the position of the candidate node in the topology of the cloud environment (closeness to the root fault, iteration at which it was included in the topology, etc).

The above mentioned parameters may be computed from previous uses of the device 100. For example, each time a node is ranked as a priority node, the number of the neighbors of the node is used to update the mean number of neighbors. The above mentioned parameters may be selected for each node as a function of the application run on the node. For example, if a backend server uses a load balancer, all instances of the server will inherit the neighbor dependent parameters such as mean number of neighbors, mean number of alarms raised by neighbors which lead to the node, etc. In the same way, all virtual machines deployed on a physical node will inherit its (lower bound on) failure probability.

The module 107 is further configured to send the set of ranked candidate nodes to a Multi-Node Alarm Correlation module 108.

The module 108 is configured to select the best ranked candidate nodes.

For example, the best ranked candidate nodes are represented in a dashed-line circle 23. In the example of the network environment of Figure 1, the node X is the first best ranked, and the nodes Z is the second best ranked. In this example, the two best ranked nodes are selected, but in a general case, any number of best ranked nodes may be selected.

More precisely, different defined number of best ranked nodes may be selected, as described below:
- either a predefined number,
- or a predefined score threshold that should be overcome by the best ranked candidate nodes,
- or the module 108 tests the candidate nodes in a decreasing rank order until a stop condition is met. For example, the stop condition is the discovering of a root fault, or a time interval elapsed, etc.

In order to decide if a candidate node may be a root node, module 107 takes into account the number of input edges in the candidate node and the type of alarms raised by the candidate node.

Therefore, the module 107 evaluates if the root fault is associated to the set of candidate nodes or if the root fault is external to the set of candidate nodes.

Namely, the module 107 evaluates if the root fault may be associated to a candidate node of the set of node by testing each candidate node of the set of candidate node at once.

The module 108 is further configured to request the module 109 for retrieving the neighbors of the best ranked candidate nodes of the set. This step is referred to as step 5.

The module 108 is further configured to retrieve the topology, i.e. the horizontal and vertical dependencies of the best ranked candidate nodes.

The module 108 is configured to generate a new set of candidate nodes including the retrieved neighbor nodes and the horizontal and vertical dependencies of the candidate nodes.

The new set of candidate nodes also includes the alarm correlations for each node and reconstitute the alarm correlations between alarms of different nodes thanks to the retrieved nodes correlations.

The new set of candidate nodes is a set of correlated candidate nodes.

For example, the module 108 retrieves the node Y as being horizontally connected to both nodes X and Z.

The module 108 is configured to transmit the generated new set of candidate nodes to the module 104 and the method iterates to step 3.

The loop continues until root faults of alarms have been discovered or the maximum time for root fault retrieving elapsed.

Figure 3 illustrates a loop comprising two iterations starting from the cloud environment illustrated on Figure 1.

The cloud environment 1 is under supervision of the device represented on Figure 2.

The set of candidate nodes and associated alarms 24 has been discovered by the module 103 in the step 2. For the sake of illustration, the module 107 defines that the best ranked nodes are candidate nodes X and V, as represented in the dashed line circle 25.

The module 108 correlates the best ranked nodes X and V with the neighbor candidate nodes of best ranked nodes X and V in iteration 26 to generate a new set of candidate nodes 27. The module 105 determines that the root fault does not belong to the new set of candidate nodes 27 and the module 107 generates new best ranked nodes U and Y from the new set of candidate nodes 27.

The module 108 correlates the best ranked nodes U and Y with the neighbor candidate nodes of the best ranked nodes U and V in iteration 28 to generate a new set of candidate nodes 30.

The module 105 determines that the root fault does belong to the new set of candidate nodes 30 and that the root fault is generated by the root node X.

The loop stops and the module 106 presents the retrieved root fault.

The elements as the modules 102, 103, 104, 105, 106, 107, 108 and 109 as well as the candidate nodes of the cloud environment could be e.g. hardware means like e.g. an ASIC, or a combination of hardware and software means, e.g. an ASIC and an FPGA, or at least one microprocessor and at least one memory with software modules located therein. The modules 102, 103, 104, 105, 106, 107, 108 and 109 as well as the candidate nodes of the cloud environment may be implemented in a unitary or in a distributed manner. An element may be implemented directly on the multi-tenant cloud or on dedicated hardware computers.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method for selecting a root node in a cloud environment (1), the cloud environment (1) comprising nodes (U, V, W, X, Y, Z) for running application programs, wherein each node comprises at least one resource (11, 12, 13, 14), each resource being associated with a metric, the metric of each resource being associated to a resource metric threshold, wherein some nodes of the cloud environment are connected to each other by dependencies (18, 19),
the method comprising:
- detecting (1) a plurality of alarms (a, b, c, d, e, f) raised in the cloud environment, wherein each raised alarm is produced by a fault occurring in a resource (11, 12, 13, 14) of a node of the cloud environment (U, V, W, X, Y, Z), wherein a fault occurs when the metric of the resource gets over the associated resource metric threshold, wherein each fault belongs to a chain of faults starting from a root fault and propagating in the cloud environment, wherein the root fault (a) is occurring in a root node (X),
- providing (3) a set of candidate nodes (V, W, X, Z) of the cloud environment, each candidate node being correlated to one or more raised alarms, wherein a candidate node is correlated to a raised alarm produced by a fault occurring in a resource of the candidate node,
- identifying (5) a neighbor node (Y) of a candidate node (X, Z) of the set of candidate nodes, wherein a node is a neighbor of another node if the node and the other node are connected by a dependency (18, 19),
- generating (6) a new set of candidate nodes comprising the neighbor node and the set of candidate nodes,
- detecting if the root node belongs to the new set of candidate nodes, and,
- if the root node belongs to the new set of candidate nodes, determining (7) the root node among the new set of candidate nodes.

2. The method according to claim 1, further comprising, if the root node does not belong to the new set of candidate nodes, iterating (4) to the step of identifying (5) a neighbor node.

3. The method according to claim 1, further comprising, before the step of identifying:
- scoring (105) each candidate node of the set of candidate nodes, wherein scoring attributes a root probability that a candidate node is the one in which the root fault occurs,
- ranking (8) each candidate node of the set of nodes by priority order,
- selecting (23) a defined number of the highest priority order candidate nodes to select a subset of the candidate nodes,
- for each selected highest priority order candidate node, identifying (5) a neighbor node of the selected highest priority order candidate node,
- wherein the new set of candidate nodes generated comprises the identified nodes and the highest priority order candidate nodes,
- iterating to the step of scoring (105).

4. The method according to claim 1, wherein the at least one resource of the node is selected in the group consisting of:
• a network (11)
• a random access memory RAM (12)
• a hard drive(13)
• a Central Processing Unit CPU (14),
wherein the metric of the network (11) is the rate of used bandwidth in input/output of the node, the metric of the RAM (12) is a rate of used memory, the metric of the hard drive (13) is a rate of celerity of writing and reading on the hard drive, and the metric of CPU (14) is a rate of used cycles of calculation.

5. The method according to claim 1, wherein the node is either a hardware computer machine (15) or a virtual machine VM (X, U) hosted on a hardware computer machine (15), wherein a dependency connecting some nodes of the cloud environment is a vertical and/or horizontal dependency, wherein an horizontal dependency associates two nodes running a same application program, and a vertical dependency associates a VM to the hardware computer machine hosting the VM.

6. The method according to claim 1, wherein the priority order relates to the root probability, the higher the root probability, the higher being the priority order.

7. The method according to claim 1, wherein a node may be instantiated in one or more instantiations of the node,
- the method further comprising:
- determining a set of instantiations of nodes, each instantiation of a node being associated to one of the raised alarms,
- for each determined instantiation of node of the set, correlating (2) the associated alarm to the instantiated node, in order to get the set of nodes of the cloud, each node being correlated to one or more raised alarms, wherein the instantiations of nodes are the resources of the nodes.

8. The method according to claim 1, further comprising:
- comparing the root probability to a threshold,
- if the root probability is above the threshold, identifying the candidate node as being the root node.

9. The method according to claim 8, further comprising sending a request comprising an identifier of the root node.

10. The method according to claim 9, further comprising displaying the identifier of the root node.

11. The method according to claim 1, wherein scoring (105) of a candidate node is a function of at least one of the elements selected in the list consisting of:
- a number of alarms raised by a resource of the candidate node,
- a mean number of neighbor nodes of the candidate node,
- a mean number of alarms raised by the neighbor nodes of the candidate node,
- a type of application program the candidate node runs,
- a type of hardware computer machine hosting the candidate node,
- a number of times the candidate node belongs to a set of candidate nodes.

12. A device (100) for selecting a root node in a cloud environment (10), the cloud environment comprising nodes (U, V, W, X, Y, Z) for running application programs, wherein each node comprises at least one resource (11, 12, 13, 14), each resource being associated with a metric, the metric of each resource being associated to a resource metric threshold, wherein some nodes of the cloud environment are connected to each other by dependencies (18, 19),
the device comprising:
- an anomaly detection and alarm generation module (102) comprising an input configured to detect a plurality of alarms raised in the cloud environment, wherein each raised alarm is produced by a fault occurring in a resource of a node of the cloud environment, wherein a fault occurs when the metric of the resource gets over the associated resource metric threshold, wherein each fault belongs to a chain of faults starting from a root fault and propagating in the cloud environment, wherein the root fault is occurring in a root node,
- a current state of diagnostic module (104) comprising an output configured to provide a set of candidate nodes of the cloud environment, each candidate node being correlated to one or more raised alarm, wherein a candidate node is correlated to a raised alarm produced by a fault occurring in a resource of the candidate node,
- a multi node alarm correlation module (108) configured to receive the set of candidate nodes and being further configured to identify a neighbor node of a candidate node of the set of candidate nodes, wherein a node is a neighbor of another node if the node and the other node are connected by a dependency, the multi-node alarm correlation module (108) being further configured to generate a new set of candidate nodes comprising the neighbor node and the set of candidate nodes,
- a root fault scoring module (105) configured to detect if the root node belongs to the new set of candidate nodes, and being further configured to, if the root node belongs to the new set of candidate nodes, determining the root node among the new set of candidate nodes.

## Amended claims

### Amended claims in accordance with Rule 137(2) EPC.

1. A method for selecting a root node in a cloud environment (1), the cloud environment (1) comprising nodes (U, V, W, X, Y, Z) for running application programs, wherein some nodes of the cloud environment are connected to each other by dependencies (18, 19),
the method comprising:
- detecting (1) a plurality of alarms (a, b, c, d, e, f) raised in the cloud environment, wherein each raised alarm is produced by a fault occurring in a resource (11, 12, 13, 14) of a node of the cloud environment (U, V, W, X, Y, Z),
- providing (3) a set of candidate nodes (V, W, X, Z) of the cloud environment, each candidate node being correlated to one or more raised alarms, wherein a candidate node is correlated to a raised alarm produced by a fault occurring in a resource of the candidate node,
**characterized in that** the method further comprises:
- identifying (5) a neighbor node (Y) of a candidate node (X, Z) of the set of candidate nodes, wherein a node is a neighbor of another node if the node and the other node are connected by a dependency (18, 19),
- generating (6) a new set of candidate nodes comprising the neighbor node and the set of candidate nodes,
- detecting if the root node belongs to the new set of candidate nodes, and,
- if the root node belongs to the new set of candidate nodes, determining (7) the root node among the new set of candidate nodes,
wherein each node comprises at least one resource (11, 12, 13, 14), each resource being associated with a metric, the metric of each resource being associated to a resource metric threshold, wherein a fault occurs when the metric of the resource gets over the associated resource metric threshold, wherein each fault belongs to a chain of faults starting from a root fault and propagating in the cloud environment, wherein the root fault (a) is occurring in a root node (X).

2. The method according to claim 1, further comprising, if the root node does not belong to the new set of candidate nodes, iterating (4) to the step of identifying (5) a neighbor node.

3. The method according to claim 1, further comprising, before the step of identifying:
- scoring (105) each candidate node of the set of candidate nodes, wherein scoring attributes a root probability that a candidate node is the one in which the root fault occurs,
- ranking (8) each candidate node of the set of nodes by priority order,
- selecting (23) a defined number of the highest priority order candidate nodes to select a subset of the candidate nodes,
- for each selected highest priority order candidate node, identifying (5) a neighbor node of the selected highest priority order candidate node,
- wherein the new set of candidate nodes generated comprises the identified nodes and the highest priority order candidate nodes,
- iterating to the step of scoring (105).

4. The method according to claim 1, wherein the at least one resource of the node is selected in the group consisting of:
• a network (11)
• a random access memory RAM (12)
• a hard drive(13)
• a Central Processing Unit CPU (14),
wherein the metric of the network (11) is the rate of used bandwidth in input/output of the node, the metric of the RAM (12) is a rate of used memory, the metric of the hard drive (13) is a rate of celerity of writing and reading on the hard drive, and the metric of CPU (14) is a rate of used cycles of calculation.

5. The method according to claim 1, wherein the node is either a hardware computer machine (15) or a virtual machine VM (X, U) hosted on a hardware computer machine (15), wherein a dependency connecting some nodes of the cloud environment is a vertical and/or horizontal dependency, wherein an horizontal dependency associates two nodes running a same application program, and a vertical dependency associates a VM to the hardware computer machine hosting the VM.

6. The method according to claim 1, wherein the priority order relates to the root probability, the higher the root probability, the higher being the priority order.

7. The method according to claim 1, wherein a node may be instantiated in one or more instantiations of the node,
- the method further comprising:
- determining a set of instantiations of nodes, each instantiation of a node being associated to one of the raised alarms,
- for each determined instantiation of node of the set, correlating (2) the associated alarm to the instantiated node, in order to get the set of nodes of the cloud, each node being correlated to one or more raised alarms, wherein the instantiations of nodes are the resources of the nodes.

8. The method according to claim 1, further comprising:
- comparing the root probability to a threshold,
- if the root probability is above the threshold, identifying the candidate node as being the root node.

9. The method according to claim 8, further comprising sending a request comprising an identifier of the root node.

10. The method according to claim 9, further comprising displaying the identifier of the root node.

11. The method according to claim 1, wherein scoring (105) of a candidate node is a function of at least one of the elements selected in the list consisting of:
- a number of alarms raised by a resource of the candidate node,
- a mean number of neighbor nodes of the candidate node,
- a mean number of alarms raised by the neighbor nodes of the candidate node,
- a type of application program the candidate node runs,
- a type of hardware computer machine hosting the candidate node,
- a number of times the candidate node belongs to a set of candidate nodes.

12. A device (100) for selecting a root node in a cloud environment (10), the cloud environment comprising nodes (U, V, W, X, Y, Z) for running application programs, wherein each node comprises at least one resource (11, 12, 13, 14), each resource being associated with a metric, the metric of each resource being associated to a resource metric threshold, wherein some nodes of the cloud environment are connected to each other by dependencies (18, 19),
the device comprising:
- an anomaly detection and alarm generation module (102) comprising an input configured to detect a plurality of alarms raised in the cloud environment, wherein each raised alarm is produced by a fault occurring in a resource of a node of the cloud environment, wherein a fault occurs when the metric of the resource gets over the associated resource metric threshold, wherein each fault belongs to a chain of faults starting from a root fault and propagating in the cloud environment, wherein the root fault is occurring in a root node,
- a current state of diagnostic module (104) comprising an output configured to provide a set of candidate nodes of the cloud environment, each candidate node being correlated to one or more raised alarm, wherein a candidate node is correlated to a raised alarm produced by a fault occurring in a resource of the candidate node,
- a multi node alarm correlation module (108) configured to receive the set of candidate nodes and being further configured to identify a neighbor node of a candidate node of the set of candidate nodes, wherein a node is a neighbor of another node if the node and the other node are connected by a dependency, the multi-node alarm correlation module (108) being further configured to generate a new set of candidate nodes comprising the neighbor node and the set of candidate nodes,
- a root fault scoring module (105) configured to detect if the root node belongs to the new set of candidate nodes, and being further configured to, if the root node belongs to the new set of candidate nodes, determining the root node among the new set of candidate nodes.
